Europäisches Patentamt

European Patent Office

Office européen des brevets

(11) Veröffentlichungsnummer: **0 266 650 B1**

(12) **EUROPÄISCHE PATENTSCHRIFT**

(45) Veröffentlichungstag der Patentschrift: **25.11.92**

(51) Int. Cl.⁵: $B32B\ 27/32$, B32B 27/18

(21) Anmeldenummer: **87115663.4**

(22) Anmeldetag: **26.10.87**

(54) **Nicht siegelbare, biaxial orientierte, transparente Polypropylen-Mehrschichtfolie, Verfahren zur Herstellung und ihre Verwendung.**

(30) Priorität: **04.11.86 DE 3637471**

(43) Veröffentlichungstag der Anmeldung:
**11.05.88 Patentblatt 88/19**

(45) Bekanntmachung des Hinweises auf die
Patenterteilung:
**25.11.92 Patentblatt 92/48**

(84) Benannte Vertragsstaaten:
**BE DE ES FR GB IT NL**

(56) Entgegenhaltungen:
**EP-A- 0 184 094**
**EP-A- 0 202 532**
**EP-A- 0 222 295**

(73) Patentinhaber: **HOECHST AKTIENGESELL-**
**SCHAFT**
**Postfach 80 03 20**
**W-6230 Frankfurt am Main 80(DE)**

(72) Erfinder: **Bothe, Lothar, Dr.**
**Kurt-Schumacher-Str.69E**
**W-6500 Mainz-Gosenheim(DE)**
Erfinder: **Crass, Günther**
**Bachstrasse 7**
**W-6204 Taunusstein 4(DE)**
Erfinder: **Schlögl, Gunther, Dr.**
**Finkenweg 2**
**W-6233 Kelkheim(DE)**

EP 0 266 650 B1

**Beschreibung**

Die Erfindung betrifft eine nicht siegelbare, biaxial orientierte, transparente Mehrschichtfolie. Die Erfindung betrifft ferner ein Verfahren zur Herstellung der Folie und ihre Verwendung.

Die derzeit bekannten nicht siegelbaren, biaxial orientierten Mehrschichtfolien aus Propylenpolymeren, die aus einer Basisschicht und einer oder zwei Deckschichten bestehen, weisen insbesondere den Nachteil auf, daß sie bei gleichzeitig guter Antistatik und hoher Transparenz hinsichtlich ihrer Gleit- und Antiblockeigenschaften nicht zufriedenstellend sind. Sie lassen darüber hinaus auch an Kratzfestigkeit, einer weiteren wichtigen Eigenschaft, mehr oder weniger zu wünschen übrig.

Es sind zwar schon zahlreiche Versuche unternommen worden, um Polypropylen-Mehrschichtfolien mit verbesserten Eigenschaften zu erhalten, indem man in die Deckschichten Additive inkorporiert hat, durch welche diese Eigenschaften erreicht werden sollten. So ist bereits empfohlen worden, in die Deckschichten eine wirksame Menge von einem thermoplastischen Harz, dessen Schmelzpunkt höher liegt als der des Polypropylens (unverträgliches thermoplastisches Harz), oder von einem anorganischen Pigment einzuarbeiten. Als anorganische Pigmente werden Aluminiumoxid, Siliciumdioxid, Titandioxid, synthetischer Zeolith und dergleichen sowie Mikroglasperlen genannt. Alle diese Folien vermögen die derzeitigen Forderungen nicht zu erfüllen.

In der EP-A-0 184 094 ist eine siegelfähige Mehrschichfolie offenbart, bestehend aus einer Basisschicht aus Propylenpolymeren mit einer nicht siegelfähigen Schicht, die in Kombination Polydialkysiloxan und ein anorganisches Pigment enthält.

In der US-A-4 419 411 wird eine Polypropylenmehrschichtfolie beschrieben, deren Basisschicht aus einem Polypropylen hoher Stereoregularität besteht und deren Oberflächenschicht aus einem Polyolefin vergleichsweise niedrigerer Stereoregularität besteht, in der zusätzlich ein oberflächenmodifizierendes Mittel wie ein Silikat oder ein Silikonöl enthalten ist. Die Mehrschichtfolie soll einen niedrigen Reibungskoeffizienten aufweisen, der über einen weiten Temperaturbereich konstant ist.

In der EP-A-0 138 203 wird gelehrt, daß es wirtschaftlich sei, sowohl Antiblocking- als auch Gieitmittel und gegebenenfalls weitere Zusätze nicht als Einzelkomponenten einer Polyolefinmasse zuzusetzen, sondern schon vor dem Zumischen ein Hochkonzentrat aus diesen Komponenten zu bilden, welches dann auf einmal der Polyolefinmasse zugesetzt wird.

In der EP-A-0 124 310 wird eine nicht siegelbare, biaxial orientierte Mehrschichtfolie aus Propylenpolymeren beschrieben, die gute Gleit- und Antiblockeigenschaften und gleichzeitig auch eine hohe Transparenz aufweisen soll. Sie besteht aus einer Basisschicht und mindestens einer Deckschicht, wobei die Deckschichten als eigenschaftsverbesserndes Additiv ein fein verteiltes anorganisches Pigment wie Siliciumdioxid, Aluminiumsilicat, Natrium-Aluminiumsilicat und/oder Ruß in einer solchen Menge enthalten, daß die biaxial gestreckte Mehrschichtfolie keine nennenswerte Trübung mehr aufweist. Als Maß für die mittlere Teilchengröße des Pigmentes werden 0,2 bis 5 μm angegeben. Die Gestalt (Form) der Teilchen des Pigmentes wird als nicht kritisch angesehen.

Dieser Polypropylen-Mehrschichtfolie mangelt es - abgesehen davon, daß auch die Gleit- und Antiblockwerte noch zu wünschen übrig lassen - insbesondere an einer ausreichenden Antistatik und Kratzfestigkeit. Sie kann auch, ebenso wie alle anderen derzeit bekannten, nicht siegelbaren, orientierten Mehrschichtfolien aus Propylenpolymeren nicht einer beidseitigen Coronabehandlung unterworfen werden, weil dabei das Antiblockverhalten derart vermindert wird, daß es zum Verblocken (Kleben) der Folie auf der Folienrolle kommt. Ein derartiges Verkleben der aufeinanderliegenden Folienflächen führt häufig nicht nur zu einem Verdehnen oder Abreißen der Folie, es kann sogar das Abrollen der Folie unmöglich machen.

Wie aus dem zitierten Stand der Technik hervorgeht, werden die eigenschaftsverbessernden Additive jeweils in einer Deckschicht und/oder Sasisschicht zusammengefaßt. Die Wirkungen, die die einzelnen Additive innerhalb einer Schicht aufeinander ausüben, werden daher als nicht kritisch für das Eigenschaftsbild der resultierenden Folie eingestuft.

Es sind auch siegelbare, biaxial orientierte Mehrschichtfolien aus Propylenpolymeren mit einem zwei- oder dreischichtigen Aufbau bekannt, die in den Siegelschichten ein oder mehrere Additive enthalten, um gute Gleiteigenschaften und insbesondere eine gute Maschinengängigkeit auf schnellaufenden Verpakkungsmaschinen, als der wichtigsten Eigenschaft, zu erreichen. Diese Folien, die nicht Gegenstand der vorliegenden Erfindung sind, bilden nicht nur eine eigene Gruppe, sie sind auch für wesentlich andere Einsatzzwecke gedacht als die nicht siegelbaren, orientierten Mehrschichtfolien.

Der Erfindung liegt die Aufgabe zugrunde, eine nicht siegelbare, biaxial orientierte Mehrschichtfolie der eingangs genannten Art zur Verfügung zu stellen, die alle in Rede stehenden Eigenschaften in Kombination aufweist. Sie soll gute Gleiteigenschaften und insbesondere gute Antiblockeigenschaften, eine gute Optik (das heißt, sehr geringe Trübung und eine hohe Transparenz), eine gute Antistatik und eine hohe Kratzfestigkeit aufweisen und darüber hinaus so ausgebildet sein, daß diese Eigenschaften erhalten bleiben, wenn die Folie einer Coronabehandlung unterworfen wird, mit der insbesondere eine verbesserte Bedruckbarkeit und eine verbesserte Haftung von Klebstoffen und dergleichen erreicht werden soll.

Die Aufgabe wird gelöst durch Bereitstellen einer nicht siegelbaren, biaxial orientierten, transparenten Mehrschichtfolie, dadurch gekennzeichnet, daß sie eine Basisschicht, zwei durch diese Basisschicht getrennte Zwischenschichten sowie zwei Deckschichten umfaßt. Die Deckschichten sind jeweils über einer Zwischenschicht angeordnet, wobei die Zwischenschichten eine Additiv-Kombination aus

a) einem langkettigen aliphatischen Amin und

b) einem anorganischen Pigment

und die Deckschichten jeweils ein Polydialkylsiloxan enthalten.

Das Propylenhomopolymere, aus dem erfindungsgemäß die Basisschicht, die Zwischenschichten und die Deckschichten im wesentlichen gebildet werden, ist vorzugsweise ein isotaktisches Polypropylen. Bevorzugte isotaktische Polypropylene sind solche, deren n-heptanlöslicher Anteil höchstens 15 Gew.-%, vorzugsweise höchstens 8 Gew.-%, beträgt (der n-heptanlösliche Anteil von isotaktischen Polypropylenen liegt in der Regel im Bereich von 2 bis 10 Gew.-%), deren Schmelzpunkt mindestens 150°C beträgt (er liegt in der Regel bei 155 bis 170°C) und deren Schmelzindex (nach DIN 53 735) 0,5 g bis 8 g/10 min, vorzugsweise 1,5 g bis 4g/10 min, bei 230°C und 2,16 kp Belastung beträgt.

Das Propylenhomopolymere der Zwischenschichten hat einen vorzugsweise 0,5 bis 1 g/10 min höheren Schmelzindex als das Polypropylen der Basisschicht.

Das Propylenhomopolymere der Deckschichten hat einen vorzugsweise 0,5 bis 1 g/10 min höheren Schmelzindex als das Polypropylen der Zwischenschichten.

Als Komponente a) der erfindungsgemäß für die Zwischenschichten eingesetzten Additivkombination werden bevorzugt tertiäre aliphatische Amine mit einem gegebenenfalls ein- bis dreifach ungesättigten, insbesondere geradkettigen Alkyl- oder Alkoxylrest mit 10 bis 22 Kohlenstoffatomen, vorzugsweise 12 bis 18 Kohlenstoffatomen, eingesetzt. Besonders bevorzugt sind solche tertiären aliphatischen Amine, die den genannten Alkyl- oder Alkoxylrest und zwei Hydroxy-($C_2$-$C_4$)-alkylreste aufweisen. Bevorzugte Vertreter davon sind die N,N-Bis-(2-hydroxyethyl)-alkylamine mit einem $C_{10}$-$C_{22}$-, vorzugsweise $C_{12}$-$C_{18}$-Alkylrest und N,N-Bis-(2-hydroxyethyl)-alkoxylamin mit einem $C_{10}$-$C_{22}$-, vorzugsweise $C_{12}$-$C_{18}$-Alkoxylrest oder entsprechende Mischungen. Die Menge an der Komponente a) beträgt 0,2 bis 1,5 Gew.-%, vorzugsweise 0,5 bis 1,0 Gew.-%, bezogen auf die Schicht.

Die Komponente b) der erfindungsgemäß eingesetzten Additivkombination der Zwischenschicht ist ein anorganisches Pigment.

Geeignete anorganische Pigmente sind beispielsweise Aluminiumsilikate, Calciumcarbonat und Siliciumdioxid. Aluminiumsilikate, die auch Alkali- und/oder Erdalkalimetalle enthalten können, sind bevorzugt. Der Brechungsindex des Pigments liegt im Bereich von 1,4 bis 1,6. Der Aspekt Ratio, das Verhältnis von Fläche zu Dicke der Pigmentteilchen (Partikelgeometrie-Wert), liegt unter 8, vorzugsweise unter 4. Die mittlere Teilchengröße beträgt 0,2 bis 4 $\mu$m, vorzugsweise 0,2 bis 1 $\mu$m, wobei das größte Teilchen einen Durchmesser von unter 25 $\mu$m hat. Die Menge der Komponente b), bezogen auf das Gewicht der Zwischenschicht, beträgt 0,1 bis 1 Gew.-%, vorzugsweise 0,2 bis 0,6 Gew.-%.

Die Deckschichten enthalten als Additivkomponente Polydialkylsiloxane. Vorzugsweise werden Polydi-($C_1$-$C_4$)-alkylsiloxane eingesetzt, wobei Polydimethylsiloxan besonders bevorzugt ist.

Das Polydialkylsiloxan hat eine Viskosität von 1 000 bis 100 000mm²/s, vorzugsweise 5 000 bis 50 000mm²/s bei 25°C. Die Menge des Polydialkylsiloxans beträgt 0,2 bis 1 Gew.-%, vorzugsweise 0,3 bis 0,7 Gew.-%, bezogen auf das Gewicht der Deckschicht.

Sowohl die Zwischenschichten als auch die Deckschichten können in ihrer Zusammensetzung jeweils entweder identisch, aber auch verschieden sein. Besonders bevorzugt ist jedoch, daß sowohl beide Zwischenschichten wie auch beide Deckschichten gleiche Zusammensetzung aufweisen.

Die Dicke der erfindungsgemäßen Mehrschichtfolie kann innerhalb weiter Grenzen variieren und richtet sich insbesondere nach dem beabsichtigten Einsatz. Sie ist etwa 8 bis 50 $\mu$m, vorzugsweise 12 bis 40 $\mu$m, dick (Gesamtdicke), wobei die Dicke einer Zwischenschicht etwa 0,5 bis 2 $\mu$m und die Dicke einer Deckschicht 0,1 bis 2 $\mu$m, vorzugsweise 0,5 bis 1 $\mu$m, ist.

Die erfindungsgemäße Mehrschichtfolie ist biaxial orientiert (streckorientiert), wobei das Längsstreckverhältnis vorzugsweise 4 bis 7 : 1 und das Querstreckverhältnis vorzugsweise 7 bis 10 : 1 beträgt.

Die Herstellung der erfindungsgemäßen Mehrschichtfolien aus Propylenpolymeren kann nach einem der an sich bekannten Verfahren vorgenommen werden. Dazu werden bekanntlich zunächst die den Schichten entsprechenden Mischungen (Formmassen) durch Mischen der einzelnen Komponenten in einem Mischer bereitet. Es versteht sich von selbst, daß bei der Bereitung der Mischungen mit der Additivkombination die einzelnen Additive in das Propylenhomopolymere gut eingemischt (eingearbeitet) werden, damit sie gleichmäßig verteilt vorliegen. Die Mehrschichtfolien können durch Coextrusion und anschließendes Streckorientieren hergestellt werden, durch nachträgliches Beschichten einer streckorientierten Folie (Basisfolie) oder durch Beschichten einer unorientierten Folie und anschließendes Streckorientieren.

Die Herstellung der erfindungsgemäßen Mehrschichtfolie erfolgt vorzugsweise nach dem Coextrusionsverfahren. Dabei werden die den Schichten der Folie entsprechenden Schmelzen durch eine Flachdüse coextrudiert, die coextrudierte Folie zur Verfestigung abgekühlt, die verfestigte Folie biaxial streckorientiert, in Längsrichtung vorzugsweise um das Vier- bis Siebenfache und in Querrichtung vorzugsweise um das Sieben- bis Zehnfache, und die biaxial streckorientierte Folie thermofixiert. Zunächst wird also das Polymere (die Mischung) entsprechend der Basisschicht bzw. der Deckschicht oder den Deckschichten in einem Extruder verflüssigt und komprimiert. Die Schmelzen werden dann gleichzeitig durch eine Flachdüse (Breitschlitzdüse) gepreßt, und die ausgepreßte mehrschichtige Folie wird auf einer oder mehreren Walzen, die durch Kühlung auf etwa 30 bis 50°C gehalten werden, abgekühlt und verfestigt. Die so erhaltene Folie wird bei einer Temperatur unterhalb des Schmelzpunktes des eingesetzten Polymeren längsgestreckt. Die Längsstreckung wird vorzugsweise bei einer Folientemperatur von 120 bis 140°C durchgeführt. Die Querstreckung wird vorzugsweise bei einer Strecktemperatur von 160 bis 180°C durchgeführt. Die biaxiale Streckung kann simultan oder nacheinander vorgenommen werden, sie wird vorzugsweise nacheinander, und zwar zuerst längs und dann quer, vorgenommen. Das Längsstrecken wird man zweckmäßigerweise mit Hilfe zweier entsprechend dem angestrebten Streckverhältnis verschieden schnell laufender Walzen durchführen und das Querstrecken mit Hilfe eines entsprechenden Kluppenrahmens. Zur Thermofixierung (Wärmenachbehandlung) wird die Folie etwa 0,5 bis 10 Sekunden lang bei einer Temperatur von 150 bis 160°C gehalten.

Die erfindungsgemäße nicht siegelbare, biaxial streckorientierte transparente Mehrschichtfolie kann einer Coronabehandlung unterworfen werden, um sie damit insbesondere gut bedruckbar und beispielsweise mit Klebstoffen beschichtbar zu machen. Es ist ein unerwartetes Ergebnis, daß es bei der erfindungsgemäßen Folie mit der angegebenen nen Addtiivkombination in den Zwischenschichten möglich ist, sie einer Coronabehandlung auszusetzen, ohne daß dabei irgendeine ihrer wertvollen Eigenschaften negativ beeinflußt wird, nachdem in der Literatur darauf hingewiesen wird und eigene Versuche es bestätigt haben, daß das Gleit- und Antiblockverhalten von Polypropylenfolien bei einer Coronabehandlung beträchtlich verschlechtert wird.

Zur Coronabehandlung der Folie, die nach einer der bekannten Methoden durchgeführt werden kann und ein- oder beidseitig erfolgen kann, wird zweckmäßigerweise so vorgegangen, daß die Folie zwischen zwei als Elektroden dienenden Leiterelementen hindurchgeführt wird, wobei zwischen den Elektroden eine so hohe Spannung, meist Wechselspannung (etwa 10 000 V und 10 000 Hz), angelegt ist, daß Sprüh- oder Coronaentladungen stattfinden. Durch die Coronabehandlung wird eine Oberflächenspannung von etwa 38 mN/m erzeugt.

Die erfindungsgemäße nicht siegelbare, biaxial orientierte transparente Mehrschichtfolie aus einem Propylenhomopolymeren ist aufgrund ihres hervorragenden Eigenschaftsbildes einschließlich der Möglichkeit, eine Coronabehandlung durchzuführen, ohne das Eigenschaftsbild negativ zu beeinträchtigen, vielseitig verwendbar. Die erfindungsgemäße Folie wird vorzugsweise als Beutelfolie, Kaschierfolie, Trennfolie, Transfermetallisierfolie oder Klebebandfolie verwendet.

In den folgenden Beispielen wird die Erfindung näher erläutert, ohne jedoch darauf beschränkt zu sein.

Beispiele und Vergleichsbeispiele

Nach dem Coextrusionsverfahren wurden jeweils aus einer Breitschlitzdüse von 280 mm Breite und 1,8 mm Spalthöhe bei einer Extrusionstemperatur von 260°C und einer Fördermenge von 70 kg/h 1 mm dicke, 1-, 3- und 5schichtige Folien extrudiert, wobei die Basisschicht jeweils aus einem isotaktischen Polypropylen mit einem n-heptanlöslichen Anteil von 4,5 Gew.-%, einem Schmelzpunkt von 165°C und einem Schmelzflußindex von 2 g/10 min bei 230°C und 2,16 kp Belastung (DIN 53 735) bestand, die Zwischenschichten und Deckschichten aber jeweils verschieden zusammengesetzt waren. Nach Durchlaufen einer 20 mm langen Luftstrecke wurden die coextrudierten Folien auf einer 30°C warmen Kühlwalze des Durchmessers 600 mm abgeschreckt (Umfangsgeschwindigkeit 4,5 m/min). Danach wurden die Folien von der Kühlwalze auf ein Walzentrio von ebenfalls 30°C (Umfangsgeschwindigkeit 4,5 m/min) übergeben und nach Erwärmung auf 130°C von einem weiteren Walzentrio um den Faktor 5 längsgestreckt. Anschließend wurden sie bei 175°C auf das 10fache in Querrichtung verstreckt. Die Thermofixierung erfolgte bei 160°C 5 s lang, woran sich gegebenenfalls eine einseitige oder beidseitige Coronabehandlung anschloß.

Beispiel 1

Die Folie hatte einen sogenannten ABCBA-Aufbau, d.h. die beiden Deckschichten (A) und die beiden Zwischenschichten (B) waren jeweils gleich, unterschieden sich aber in der Zusammensetzung von der Basisschicht (C). Die Basisschicht (C) bestand wie oben angegeben aus einem isotaktischen Polypropylen, die Zwischenschichten (B) bestanden aus einem isotaktischen Polypropylen mit einem n-heptanlöslichen Anteil von 4,5 Gew.-%, einem Schmelzpunkt von 165°C und einem Schmelzflußindex von 3 g/10 min als Hauptbestandteil. Sie enthielten zusätzlich 0,6 Gew.-% N,N-Bis-(2-hydroxyethyl)-$C_{12}$-$C_{18}$-alkylamin und 0,3 Gew.-% von einem Aluminiumsilikat mit einem Aspekt Ratio von 6. Die mittlere Teilchengröße (der mittlere Teilchendurchmesser) betrug 0,55 $\mu$m, der obere Schnitt lag bei 10 $\mu$m. Als Brechungsindex wurden 1,56 gemessen. Die Deckschichten (A) bestanden aus einem isotaktischen Polypropylen mit einem n-heptanlöslichen Anteil von 4,5 Gew.-%, einem Schmelzpunkt von 165°C und einem Schmelzflußindex von 4 g/10 min. Zusätzlich enthielten sie 0,6 Gew.-% eines Polydimethylsiloxans mit einer Viskosität von 30 000mm$^2$/s bei 25°C.

Beispiel 2

Dieses Beispiel entspricht Beispiel 1, allerdings mit der Ausnahme, daß der Gehalt an Aluminiumsilikat in den Zwischenschichten 0,6 Gew.-% betrug.

Beispiel 3

Dieses Beispiel entspricht Beispiel 1, wobei anstelle des Aluminiumsilikats 0,3 Gew.-% eines Calciumcarbonats in den Zwischenschichten enthalten war. Der mittlere Durchmesser der $CaCO_3$-Teilchen betrug 1,1 $\mu$m, der obere Schnitt lag bei 7 $\mu$m, der Aspekt Ratio bei 1 und der Brechungsindex bei 1,59.

Beispiel 4

Auch dieses Beispiel entspricht Beispiel 1, wobei die Zwischenschichten allerdings als Antiblockmittel 0,6 Gew.-% Calciumcarbonat enthielten.

Alle beispielhaft ausgeführten Folien wiesen eine Gesamtdicke von 20 $\mu$m auf. Die Dicke der Zwischenschicht betrug etwa 1 $\mu$m. Die Deckschichten hatten jeweils eine Dicke von etwa 0,5 $\mu$m. Von den in den Beispielen 1 bis 4 beschriebenen Folien wurde jeweils ein Muster ohne Coronabehandlung, eines mit einer einseitigen Coronabehandlung sowie eines mit beidseitiger Coronabehandlung hergestellt. Die zur Coronabehandlung angelegten elektrischen Spannungen waren von einer Größenordnung, so daß jeweils eine Oberflächenspannung von etwa 38 mN/m erreicht wurde.

Vergleichsbeispiel 1

Die Folie dieses Vergleichsbeispiels bestand lediglich aus der Basisschicht, die der im Beispiel 1 beschriebenen entsprach. Die Gesamtdicke der Folie betrug 20 $\mu$m. Es wurde jeweils ein Muster ohne Coronabehandlung, eines mit einer einseitigen Coronabehandlung und eines mit beidseitiger Coronabehandlung hergestellt. Die erzielten Oberflächenspannungen betrugen jeweils 38 mN/m.

Vergleichsbeispiel 2

Auch die Folie dieses Vergleichsbeispiels bestand lediglich aus einer Basisschicht, die der im Beispiel 1 beschriebenen entsprach. Im Unterschied zu Vergleichsbeispiel 1 enthielt sie aber Additive, und zwar 0,3 Gew.-% des genannten Aluminiumsilikats (vgl. Beispiel 2), 0,2 Gew.-% Stearinsäureamid und 0,2 Gew.-.% des in Beispiel 2 genannten $C_{12}$-$C_{18}$-Alkylamins (Gewichtsprozente bezogen auf die Schicht). Von Vergleichsbeispiel 2 wurde jeweils ein Muster ohne Coronabehandlung, eines mit einseitiger Coronabehandlung und eines mit einer beidseitigen Coronabehandlung hergestellt. Die erzielten Oberflächenspannungen betrugen jeweils 38 mN/m.

Vergleichsbeispiel 3

Die Folie bestand aus einer Basisschicht (C) und zwei Deckschichten, die in ihrer Zusammensetzung den in Beispiel 1 beschriebenen Zwischenschichten (B) entsprachen. Die Basisschicht (C) entsprach der Basisschicht des Beispiels 1, allerdings enthielt sie als Additive 0,2 Gew.-% Stearinsäureamid und 0,2 Gew.-% des genannten $C_{12}$-$C_{18}$-Alkylamins (vgl. Beispiel 1). Auch von diesem Vergleichsbeispiel wurde jeweils ein Muster ohne Coronabehandlung, eines mit einer einseitigen Coronabehandlung sowie eines mit beidseitiger Coronabehandlung hergestellt. Die erzielten Oberflächenspannungen betrugen jeweils 38 mN/m.

Vergleichsbeispiel 4

Der Aufbau der Folie entsprach der des Vergleichsbeispiels 3. Die Basisschicht (C) war mit der Basisschicht des Beispiels 1 identisch. Die Deckschichten entsprachen den Deckschichten des Vergleichsbeispiels 3. Auch von diesem Vergleichsbeispiel wurde jeweils ein Muster ohne Coronabehandlung, eines mit einer einseitigen Coronabehandlung sowie eines mit beidseitiger Coronabehandlung hergestellt. Die jeweilige Oberflächenspannung betrug jeweils 38 mN/m.

An den Folien der Beispiele und Vergleichsbeispiele wurden die Antiblockeigenschaften, die Gleiteigenschaften, die Optik (der Glanz und die Trübung), die Antistatik, die Kratzfestigkeit und die Abriebfestigkeit bestimmt.

Die Bestimmung der Gleiteigenschaften erfolgte nach DIN 53 375.

Die Bestimmung des Glanzes erfolgte nach DIN 67 530 unter Verwendung eines Reflektometers RB der Firma Dr. Lange (Bundesrepublik Deutschland).

Die Bestimmung der Trübung erfolgte nach ASTM-D 1003-52, wobei anstelle einer 4-Grad-Lochblende eine 1-Grad-Spaltblende eingesetzt und die Trübung bei vier übereinanderliegenden Folienlagen gemessen wurde (die 4 Lagen wurden gewählt, weil man dadurch im optimalen Meßbereich liegt).

Die Bestimmung der Antistatik erfolgte durch den Aschetest. Die Folie wurde durch dreimaliges Reiben mit einem Wolltuch in einer Richtung aufgeladen. Der Test ist negativ, wenn Zigarettenasche aus ca. 3 cm Entfernung von der aufgeladenen Folie angezogen wird.

Unter der Kratzfestigkeit einer Folie versteht man die Beständigkeit der Folienoberfläche gegen Veränderungen infolge mechanischer Beanspruchung, insbesondere einerseits bei Reibungsbeanspruchung die Entstehung linienförmiger Zerstörungen (Kratzer) und andererseits bei Prallbeanspruchung die Entstehung von Verschleißmulden.

Als Maß für die Kratzfestigkeit einer Folie wird in der Regel der Trübungsanstieg $\Delta T$, der durch die Verkratzung verursacht wird, verwendet:

$$\Delta T = T_v - T_o$$

Unter $T_v$ ist hierbei die Trübung der verkratzten Folie, unter $T_o$ die Trübung der nicht veränderten Originalfolie zu verstehen, wobei im Rahmen der Kratzfestigkeitsmessung die Trübung jeweils an einer Folienlage bestimmt wird.

Die Kratzfestigkeit gegen Reibungsbeanspruchung wurde nach DIN 53 754 bestimmt. Die Messungen wurden mit einem Abriebmeßgerät des Typs 1161 der Firma Frank (BRD) durchgeführt, wobei Reibräder der Marke CALIBRASE® CS-10 F der Firma Teledyne (USA) eingesetzt wurden, die mit 250 g belastet waren.

Die Kratzfestigkeit gegen Prallbeanspruchung wurde nach dem Sandrieselverfahren bestimmt. Beim Sandrieselverfahren läßt man 1 kg Carborundum (SiC) der Kornklasse 0,8 mm aus 635 mm Höhe durch ein Fallrohr auf die Folienoberfläche rieseln, die mit der Fallrichtung der Körner einen Winkel von 45°C bildet.

In der folgenden Tabelle sind die Ergebnisse der Prüfungen zusammengefaßt.

Tabelle

| Beispiel | Anti-blok-king | Gleit-ver-halten | Optik | Anti-statik | Kratzfestigkeit Reibbean-spruchung | Kratzfestigkeit Prallbean-spruchung |
|---|---|---|---|---|---|---|
| 1 | ++ | ++ | ++ | ++ | ++ | ++ |
| 1 T | ++ | ++ | ++ | ++ | ++ | ++ |
| 1 TT | ++ | ++ | ++ | ++ | ++ | ++ |
| 2 | ++ | ++ | ++ | ++ | ++ | ++ |
| 2 T | ++ | ++ | ++ | ++ | ++ | ++ |
| 2 TT | ++ | ++ | ++ | ++ | ++ | ++ |
| 3 | ++ | ++ | ++ | ++ | ++ | ++ |
| 3 T | ++ | ++ | ++ | ++ | ++ | ++ |
| 3 TT | ++ | ++ | ++ | ++ | ++ | ++ |
| 4 | ++ | ++ | ++ | ++ | ++ | ++ |
| 4 T | ++ | ++ | ++ | ++ | ++ | ++ |
| 4 TT | ++ | ++ | ++ | ++ | ++ | ++ |
| Vergleichs-beispiel | | | | | | |
| 1 | -- | -- | ++ | -- | -- | ++ |
| 1 T | -- | -- | ++ | -- | -- | ++ |
| 1 TT | -- | -- | ++ | -- | -- | ++ |
| 2 | ++ | +- | -- | ++ | +- | +- |
| 2 T | ++ | +- | -- | ++ | +- | +- |
| 2 TT | -- | +- | -- | ++ | +- | +- |
| 3 | ++ | +- | +- | +- | +- | +- |
| 3 T | ++ | +- | +- | +- | +- | +- |
| 3 TT | -- | +- | +- | +- | +- | +- |
| 4 | ++ | +- | ++ | -- | +- | +- |
| 4 T | ++ | +- | ++ | -- | +- | +- |
| 4 TT | -- | +- | ++ | -- | +- | +- |

++ = sehr gut; +- = mäßig; -- = schlecht

T = einseitig behandelt; TT = beidseitig behandelt

**Patentansprüche**

1. Nicht siegelbare, biaxial orientierte, transparente Mehrschichtfolie aus Polypropylen, dadurch gekennzeichnet, daß sie eine Basisschicht, zwei durch diese Basisschicht getrennte Zwischenschichten sowie zwei Deckschichten umfaßt, wobei die Deckschichten jeweils über einer Zwischenschicht angeordnet sind und wobei die Zwischenschichten eine Additivkombination aus
   a) einem langkettigen aliphatischen Amin und
   b) einem anorganischen Pigment

und die Deckschichten jeweils ein Polydialkylsiloxan enthalten.

2. Mehrschichtfolie nach Anspruch 1, dadurch gekennzeichnet, daß sie einseitig coronabehandelt ist.

3. Mehrschichtfolie nach Anspruch 1, dadurch gekennzeichnet, daß sie beidseitig coronabehandelt ist.

4. Mehrschichtfolie nach den Ansprüchen 1 bis 3, dadurch gekennzeichnet, daß Basisschicht, Zwischenschichten und Deckschichten im wesentlichen aus einem Propylenhomopolymeren, insbesondere einem isotaktischen Polypropylen mit einem n-heptanlöslichen Anteil von höchstens 15 Gew.-%, einem Schmelzpunkt von mindestens $150\,^{\circ}$C und einem Schmelzindex von 0,5 g bis 8 g/10 min bei $230\,^{\circ}$C und 2,16 kp Belastung, bestehen.

5. Mehrschichtfolie nach einem oder mehreren der Ansprüche 1 bis 4, dadurch gekennzeichnet, daß das langkettige aliphatische Amin a) ein N,N-Bis-(hydroxy-$C_2$-$C_4$-alkyl)-$C_{12}$-$C_{18}$-alkylamin oder ein N,N-Bis-(hydroxy-$C_2$-$C_4$-alkyl)-$C_{12}$-$C_{18}$-alkoxylamin oder eine Mischung aus diesen ist.

6. Mehrschichtfolie nach Anspruch 5, dadurch gekennzeichnet, daß die Zwischenschichten das aliphatische Amin a) in einer Konzentration von 0,2 bis 1,5 Gew.-%, bezogen auf das Gewicht der Zwischenschicht, enthalten.

7. Mehrschichtfolie nach einem oder mehreren der Ansprüche 1 bis 6, dadurch gekennzeichnet, daß das anorganische Pigment b) einen Brechungsindex im Bereich von 1,4 bis 1,6, einen Aspekt Ratio von kleiner als 8 und eine mittlere Teilchengröße von 0,2 bis 4 $\mu$m aufweist.

8. Mehrschichtfolie nach Anspruch 7, dadurch gekennzeichnet, daß die Zwischenschichten das anorganische Pigment b) in einer Konzentration von 0,1 bis 1,0 Gew.-%, bezogen auf das Gewicht der Zwischenschicht, enthalten.

9. Mehrschichtfolie nach einem oder mehreren der Ansprüche 1 bis 8, dadurch gekennzeichnet, daß das Polydialkylsiloxan der Deckschichten eine Viskosität bei $25\,^{\circ}$C von 1 000 bis einigen 100 000 $mm^2$/s hat und in den Deckschichten, bezogen auf deren Gewicht, in einer Konzentration von 0,2 bis 1 Gew.-% enthalten ist.

10. Mehrschichtfolie nach einem oder mehreren der Ansprüche 1 bis 9, dadurch gekennzeichnet, daß die Folie eine Gesamtdicke von 8 bis 50 $\mu$m, die Zwischenschichten jeweils eine Dicke von 0,5 bis 2 $\mu$m und die Deckschichten jeweils eine Dicke von 0,1 bis 2 $\mu$m aufweisen.

11. Verfahren zur Herstellung der Mehrschichtfolie nach einem oder mehreren der Ansprüche 1 bis 10, dadurch gekennzeichnet, daß man die den Schichten der Folie entsprechenden Schmelzen durch eine Flachdüse coextrudiert, die coextrudierte Folie zur Verfestigung abkühlt, die verfestigte Folie biaxial streckorientiert und die biaxial streckorientierte Folie thermofixiert.

12. Verwendung der Mehrschichtfolie nach einem oder mehreren der Ansprüche 1 bis 10 als Beutelfolie, Kaschierfolie, Trennfolie, Transfermetallisierungsfolie oder Klebebandträgerfolie.

## Claims

1. Non-sealable, biaxially oriented, transparent multilayer polypropylene film, characterized in that it comprises a base layer, two intermediate layers separated by this base layer and two covering layers, each covering layer being disposed on top of an intermediate layer and the intermediate layers containing an additive combination formed of
   a) a long-chain aliphatic amine and
   b) an inorganic pigment,
   and each covering layer containing a polydialkylsiloxane.

2. The multilayer film as claimed in claim 1, characterized in that it is corona-treated on one side.

3. The multilayer film as claimed in claim 1, characterized in that it is corona-treated on both sides.

4. The multilayer film as claimed in claims 1 to 3, characterized in that the base layer, the intermediate layers and the covering layers essentially comprise a propylene homopolymer, in particular an isotactic polypropylene with an n-heptane-soluble amount of not more than 15 % by weight, a melting point of at least 150 °C and a melt index in the range from 0.5 g to 8 g/10 min at 230 °C and under a load of 2.16 kp.

5. The multilayer film as claimed in any one or more of claims 1 to 4, characterized in that the long-chain aliphatic amine a) is an N,N-bis-(hydroxy-$C_2$ to $C_4$-alkyl)-$C_{12}$ to $C_{18}$-alkylamine or an N,N-bis-(hydroxy-$C_2$ to $C_4$-alkyl)-$C_{12}$ to $C_{18}$-alkoxyamine or a mixture of these.

6. The multilayer film as claimed in claim 5, characterized in that the intermediate layers contain the aliphatic amine a) in a concentration from 0.2 to 1.5 % by weight, based on the weight of the intermediate layer.

7. The multilayer film as claimed in any one or more of claims 1 to 6, characterized in that the inorganic pigment b) has an index of refraction in the range from 1.4 to 1.6, an aspect ratio of less than 8 and an average particle size from 0.2 to 4 $\mu$m.

8. The multilayer film as claimed in claim 7, characterized in that the intermediate layers contain the inorganic pigment b) in a concentration from 0.1 to 1.0 % by weight, based on the weight of the intermediate layer.

9. The multilayer film as claimed in any one of more of claims 1 to 8, characterized in that the polydialkylsiloxane of the covering layers has a viscosity at 25 °C of from 1,000 up to several 100,000 mm$^2$/s and is contained in the covering layers in a concentration from 0.2 to 1 % by weight, based on the weight of the covering layer.

10. The multilayer film as claimed in any one or more of claims 1 to 9, characterized in that the film has an overall thickness from 8 to 50 $\mu$m, each intermediate layer has a thickness from 0.5 to 2 $\mu$m, and each covering layer has a thickness from 0.1 to 2 $\mu$m.

11. A process for the preparation of the multilayer film as claimed in any one or more of claims 1 to 10, characterized in that the melts corresponding to the layers of the film are coextruded through a flat-sheet die, the coextruded film is cooled for solidification, the solidified film is biaxially stretch-oriented and the biaxially stretch-oriented film is heat-set.

12. Use of the multilayer film as claimed in any one or more of claims 1 to 10 as bag film, laminating film, interleaving film, transfer metallizing film or base film for adhesive tapes.

**Revendications**

1. Film multicouche transparent en polypropylène, biaxialement orienté et non scellable, caractérisé en ce qu'il comprend une couche de base, deux couches intermédiaires séparées par cette couche de base ainsi que deux couches de couverture, chaque couche de couverture étant disposée sur une couche intermédiaire, les, couches intermédiaires contenant une combinaison d'additifs composée de
   a) une amine aliphatique à longue chaîne, et
   b) un pigment minéral,
   et les couches de couverture contenant chacune un polydialkylsiloxane.

2. Film multicouche selon la revendication 1, caractérisé en ce qu'il est traité par corona sur une seule face.

3. Film multicouche selon la revendication 1, caractérisé en ce qu'il est traité par corona sur les deux faces.

4. Film multicouche selon les revendications 1 à 3, caractérisé en ce que la couche de base, les couches intermédiaires et les couches de couverture se composent essentiellement d'un homopolymère de propylène, en particulier un polypropylène isotactique dont la partie soluble dans le n-heptane représente au plus 15 % en poids, le point de fusion vaut au moins 150°C et l'indice de fluidité à chaud vaut de 0,5 g à 8 g/10 min, à 230°C et sous une charge de 2,16 kp.

5. Film multicouche selon une ou plusieurs des revendications 1 à 4, caractérisé en ce que l'amine aliphatique à longue chaîne a) est une
N,N-bis-(hydroxyalkyl-$C_{2-4}$)alkyl($C_{12-18}$)amine ou une
N,N-bis-(hydroxyalkyl-$C_{2-4}$)alcoxyl($C_{12-18}$)amine ou un de leurs mélanges.

6. Film multicouche selon la revendication 5, caractérisé en ce que les couches intermédiaires renferment l'amine aliphatique a) à une concentration de 0,2 à 1,5 % en poids, par rapport au poids de la couche intermédiaire.

7. Film multicouche selon une ou plusieurs des revendications 1 à 6, caractérisé en ce que le pigment minéral b) présente un indice de réfraction de l'ordre de 1,4 à 1,6, un rapport dimensionnel inférieur à 8 at une taille moyenne de particules de 0,2 à 4 $\mu$m.

8. Film multicouche selon la revendication 7, caractérisé en ce que les couches intermédiaires renferment le pigment minéral b) à une concentration de 0,1 à 1,0 % en poids, par rapport au poids de la couche intermédiaire.

9. Film multicouche selon une ou plusieurs des revendications 1 à 8, caractérisé en ce que le polydialkylsiloxane des couches de couverture possède une viscosité à 25°C de 1000 à quelques 100000 mm$^2$/s et est présent dans les couches de couverture à une concentration de 0,2 à 1 % en poids par rapport à leur poids.

10. Film multicouche selon une ou plusieurs des revendications 1 à 9, caractérisé en ce que l'épaisseur totale du film vaut de 8 à 50 $\mu$m, l'épaisseur de chaque couche intermédiaire vaut de 0,5 a 2 $\mu$m et l'épaisseur de chaque couche de couverture vaut de 0,1 à 2 $\mu$m.

11. Procédé de fabrication du film multicouche selon une ou plusieurs des revendications 1 à 10, caractérisé en ce qu'on coextrude, à travers une filière plate, les masses fondues correspondant aux couches du film, on refroidit, pour le consolider, le film coextrudé, on oriente biaxialement par étirage le film consolidé, et on effectue un thermofixage du film orienté par étirage biaxial.

12. Utilisation du film multicouche selon une ou plusieurs des revendications 1 a 10, comme film pour sachets, film de couchage, film de séparation, film pour métallisation par transfert ou film support pour bande adhésive.